# EUROPEAN PATENT SPECIFICATION

(11) **EP 1 908 524 B1**
(45) Date of publication and mention of the grant of the patent: **27.04.2011**
(21) Application number: 07117545.9
(22) Date of filing: 28.09.2007
(51) Int. Cl.: B02C 4/10, B02C 4/26, A23N 1/02, C11B 1/06, B30B 11/20

(54) **A crusher to produce paste out of olives and olive like oily and juicy fruits with stones**
Zerkleinerungsmaschine, um Paste aus Oliven und olivenartigen öligen und saftigen Früchten mit Steinen zu produzieren
Broyeur pour produire une pâte à partir d'olives et de fruits oléagineux et juteux à noyaux

(30) Priority: 04.10.2006 TR 200605482
(43) Date of publication of application: 09.04.2008
(73) Proprietor: TUBITAK-Turkiye Bilimsel ve Teknolojik ve Arastima Kurumu, 06100 Ankara (TR)
(72) Inventor: Yildrim, Nihat Mechanical Eng., 27310 Gaziantep (TR)

(56) References cited:
- EP-A- 0 363 975
- DE-C- 558 318
- GB-A- 999 691
- JP-A- 59 199 198
- DATABASE WPI Week 198049 Derwent Publications Ltd., London, GB; AN 1980-87886C XP002463687 -& SU 729 094 A (ARMN AGRIC MECHAN) 28 April 1980 (1980-04-28)

## Description

### Technical field

This invention relates to a crusher which can be used to crush continuously the olive and like fruits with stones but at a relatively low crushing speed and satisfactory working capacity for oil and juice extraction purposes.

### Background art

The first one of the conventional crushers is the rotating stone crusher which handles olive on batch basis therefore not suitable for continuous operations and creates relatively higher labour cost. In this type of crushing systems, a fixed amount of olives, a batch, is usually loaded onto a skip in which the olives are forced by the combined effect of both weight and rotation of the heavy stone(s). For certain duration in the skip the olives are both crushed and mixed thoroughly and then the paste is removed from the skip to load a new batch of fresh olives either manually or by means of some automation process. Because of the reasons of both having an intermittent/discontinuous process due to batch processing of olives and the labour force required the conventional stone crushers are not fit to increase the capacity as required and also the cost of processing is relatively higher.

On the other hand, the most widely used and accepted second type crushers are the hammer or like metal based crushers which rotate at much higher speeds to be able to increase the working capacity. Compared to 20-50rpm rotational or 1-3m/s tip velocity of the stone crushers, metal crushers rotate at almost 20-50 times more speeds, around 1500-2800rpm rotational or 20-50m/s tip velocity, and cause negative effects on the paste itself hence the processes following crushing and the oil quality. High speed crushing in rotational form usually creates high friction which at the end causes temperature increase and likely oil quality changes. Wear of metal parts under rubbing and forcing actions is also an unavoidable situation under high speed conditions. For an easy extraction of oil from the oily fruits with natural water content, the oil and water drops should not be forced to an emulsification state. Whereas the high speed crushing naturally may help the drops to emulsify during crushing process. This then can cause a low yield during processes afterwards. A low speed crusher with satisfactory capacity, on the other hand, is likely to avoid such disadvantages that the conventional metal crushers present.

Another crusher (WO 2004/011580A1), different from the above two, has partly satisfied the requirements stated above, especially reducing the tip speed to and below 1m/s. This new crusher performs its crushing functions with the principle of a helicoid meat mincing machine. However, due to reduced rotational hence forward linear speed of the feeding helicoid the crushing capacity reduces too. At the same time oily therefore low friction surfaces of the feeding helicoid can not create the required linear pushing/feeding force and some of the fruit stones remain within the crusher and block the passageways of the crusher. Under such conditions, pulping process rather than a crushing process is performed but the stones create a problem since they can not be removed easily. This process might be used for pulping objectives if necessary improvements are made to the system. As a crusher, it can pulp the soft part of the fruit and push it through the blades and holes while mincing them, but relatively harder and especially larger size and round like Stones can not easily be minced and forced through small holes. The pulped Stones collected within the crusher naturally cause capacity reduction. In addition, some of the broken Stone particles might easily block the outlet holes and reduce the capacity again since enough pushing force can not be produced by the oily helicoid surfaces as stated above. This then also causes temperature increase of the paste due to partly blocked outlet holes.

In application "SU 19772518577" (SU 729 094A), a press pelleting apparatus (compressing to unitize) is described. The aim of that invention is to compress the loose animal feedstuff and pellet them but not to crush or cut them into particles. The only similarity of the present invention and that invention is that they both operate according to the principle of decreasing volume. Even though those inventions are not comparable in a technical manner the differences is needed to be explained below in order to state clearly the prior art. First of all the problem they solved and the solution they bring are completely different. In patent SU 729 094A the pelleting press (previous patent) compresses the loose feedstuff through the radial channels to pelletize and solidify them but the present invention aims to crush and cut the solid olives and like fruits into particulate matter through radial channels or outlets(15). Secondly, pelleting press has only one row of radial channels positioned circumferentially whereas present invention has multiple rows of channels separated by thin plates(14) in between. Furthermore, the separating thin plates (14) used between radial channels in present invention do function as cutting blades for the fruits and this is not the case in pelleting press. Finally, the thickness of the radial channels in pelleting press is fixed while the thickness of outlets(15) in present invention can be arranged via thickness of washers(11) depending on the size of particulate matter or crushed fruit(8) required.

### Disclosure of the invention

### Technical problem

With the design of a new crusher, crushing of oily fruits with stones is aimed, while avoiding the disadvantages mentioned above and keeping in mind that the capacity should not be too low compared to that of conventional crushers.

### Technical solution

The main/novel idea of the present crusher invention is to use the principle of reducing volume in compression like in cylinder-piston system continuously rather than using the principles of friction, impact crushing or dead weight of a stone crusher. Having openings/channels for the continuous paste outlet during crushing is another novel idea belong to the this invention.

### Brief description of the drawings

Figure 1, A general view (perspective) of the crusher with inlet and outlet of olive and the paste

Figure 2, A detailed view of the inside of the machine

Figure 3, view of the section AA of figure 2

**THE NUMBERS USED TO EXPLAIN THE DRAWINGS**
1. fruit feeding bin
2. top plate
3. bottom plate
4. internal gear
5. external gear
6. fruit inlet openings
7. fruits
8. crushed fruits
9. motor shaft
10. arm driven by the motor shaft
11. washers between thin plates
12. pre-drilled holes on thin plates
13. bolts
14. thin plates making up internal gear
15. gap or outlet between the thin plates making up internal gear

### Best mode for carring out the invention

Present invention, hereafter, is explained in more detail in reference to the attached drawings which are

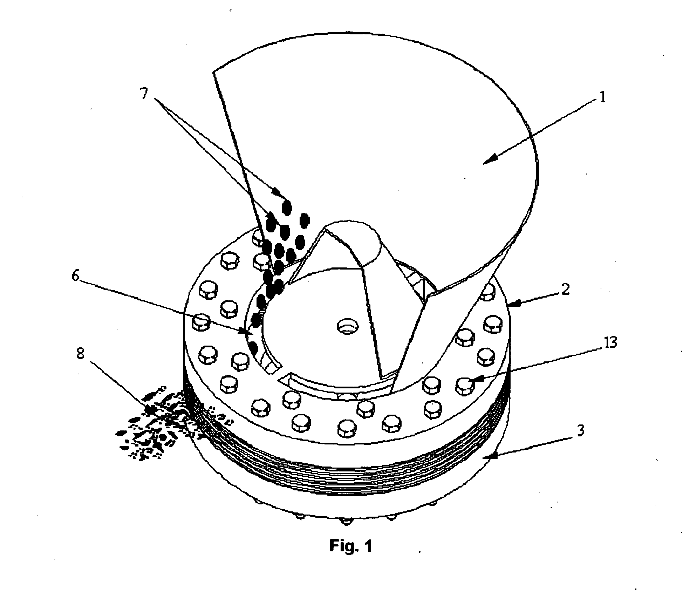

Figure 1, a general view (perspective) of the crusher with inlet and outlet of olive and the paste

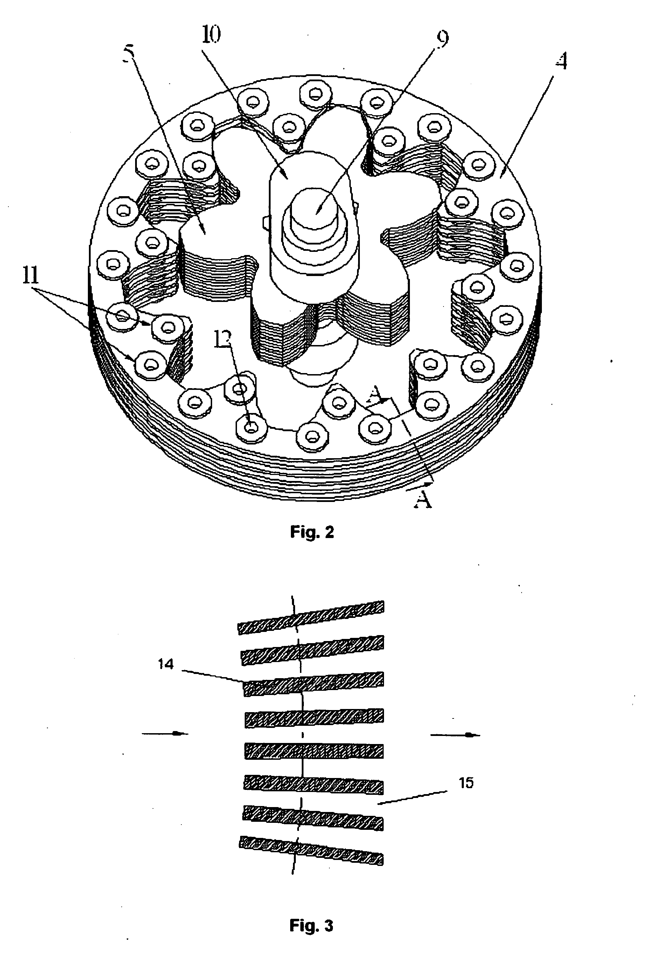

Figure 2, a detailed view of the inside of the machine

Figure 3, view of the section AA of figure 2

Besides the feeding bin (1), top plate (2) and the bottom plate (3), crusher is made up from two main parts internal gear(4) and the external gear(5). While these two gears (4,5) or only one (5 or 4) rotate, the teeth of the two gears mesh with a reducing volume between the tips and the roots of the teeth which represents the regions of crushing. The fruits (7) fed to the gap between the gears through the inlets (6) are pushed by the teeth of the external gear (5) to the roots of the internal gear (4) thus compressing and crushing them. The compressed and crushed fruits (8) by mean of volume reduce are continuously squeezed, without any blockage, through the outlets (15) between the plates (14) making up the whole internal gear (4). Fruits are crushed in a number of regions in accordance with the number of teeth of internal gear (4) and the capacity of the crusher is based on these kind of information.

Said gears (4, 5) are made to mesh continuously by driving one of the gears by an electric motor or like drive unit. Crushing of fruits can be performed by rotating either one or both of the said gears at the same time. Here, for simplicity, only one said gear (5) is assumed to be driven or rotated. Said gear (5) is driven both about its own axis and also about the axis of said internal gear (4) by an arm (10) which is driven by the shaft (9) connected to the drive unit. The teeth on the said external gear (5) will also perform an epicycloid motion.

The said external gear(5) can be composed of multiples of thin plates having the same shape or geometry as it could be made of a single part. The geometry of the teeth of the said external gear (5) could be any shape including involute to enable the rotational motion between said gears (4,5). The size of the tooth space should be such that at least one or two and preferably much more fruits can freely get into the space when the teeth are not in mesh. There is no limit to the number of teeth on said gears (4, 5). If desired, said external gear (5) can be made from multiples of thin plates to have outlets for the passage of crushed fruit as in said internal gear (4). Some of the thin plates of the said external gear (5) matching with the said outlets (15) of the said internal gear (4) can be made with slightly larger diameter to help pushing fruit through said outlets(15) of said internal gear(4).

The said internal gear (4) being more complicated/detailed than the said external gear (5) comprising multiples of said thin plates (14) which can be assembled and disassembled is another novel feature of the present inventions. Shape of the teeth of the said internal gear (4) are to be conformal with the teeth shape of the said external gear (5) to enable a proper rotational motion transfer between the said gears(4,5) and there is no limit for the teeth number of the said internal gear (4). Said internal gear (4) comprises multiples of similar shape thin plates (14) which are assembled together with the said outlets (15) between them. The size of the said outlet (15), in other words, the size of the gap between said thin plates (14) can be adjusted by some means to allow a required size crushing of the fruit and for the present invention this is maintained by constant thickness washers (11) between the said thin plates (14). By means of bolts (13) passing through the holes (12) on the said thin plates (14) with the said washers (11) in between, the said thin plates (14) can be hold together to form the said internal gear (4) as one unit. By having such said outlets (15) between the said thin plates (14) of the said internal gear (4) continuity of crushing is ensured.

Centre distance of the said gears (4,5) should be correctly adjusted to have a radial gap of 1-2mm between the tip and root of the said external and internal gears (4,5) when there is no fruit within the crusher. This, however, is not valid for the thin plates of said external gear (5) which need to have a slightly larger diameter to push the fruit through said outlets(15) of the said internal gear(4). By placing top and bottom plates (2, 3) and fixing them to the said internal gear (4) by the said bolts (13) the teeth of the said external gear (4) is enclosed during mesh similar to a cylinder-piston mechanism of an engine. This allows the tooth of the said external gear(5) push into the tooth space of the said internal gear(4) with required working clearances like a piston and create a decreasing volume to crush the fruits within the tooth space and push them one way through the said outlets (15) outward.

## Claims

1. A crusher for crushing fruits with only soft part or soft parts and stones, operating by means of volume reducing principle comprising;
a) motor shaft (9),
b) arm (10) driven by the motor shaft (9),
c) external gear (5) connected to arm (10),
d) internal gear (4) comprising multiples of thin plates (14) having the same geometry assembled by leaving multiples of gaps (15) in between each other to crush the fruits, and allowing said external gear (5) to rotate in meshing relationship,
e) washers(11) between said thin plates(14) of said internal gear(4) and bolts(13) passing through pre-drilled holes(12) on said thin plates(14),
f) bottom plate(3)
g)top plate(2) with openings(6) for fruit inlet

2. A crusher according to claim 1 **characterised in that** ;
a) said external gear(5) body being made of single unit or consist of multiples of thin plates,
b) tooth profile of the said gears(4,5) having any shape to allow circular motion of said gears, including involute and circular
c) the teeth on said external gear(5) performing an epicycloid motion,
d) having outlets on said external gear(5) similar to the outlets(15) on said internal gear(4) for crushed fruit discharge,
e)having designed some of the thin plates of said external gear(5) with slightly larger size/diameter to let them reach through the corresponding outlets(15) of said internal gear(4)

3. A crusher according to claim 1 **characterised in that**;
a) said internal gear(4) being made of multiples of said thin plates(14) for assembling and disassembling purposes and also for crushing of the fruit(7) down to required smaller size particulate matter(8),
b) having teeth of said internal gear(4) in correct shape and size to work in harmony with the teeth of said external gear(5),
c) having said internal gear(4) assembled from multiples of said thin plates(14) of the same geometry by leaving a gap (15) in between for said outlets
d) presence of constant or adjustable thickness washers(11) between said thin plates(14),
e) assembly of said thin plates (14) and said washers(11) by means of said bolts(13) passing through said predrilled holes (12) on said thin plates (14).

4. A crusher according to claim 1 wherein crushing is performed by turning just one of the said gears(4,5) or both at the same time

5. A crusher according to claim 1 wherein the thickness of said washers(11) and said outlets(15) between said thin plates(14) is constant or gradually increasing from inside to outside of the said internal gear(4) for easy discharge of the crushed fruits(8)

6. A crusher according to claim 1 wherein said arm(10) connected to said external gear(5) is functioning as a mixer

7. A crusher according to claim 1 where the external gear (5) is
i) composed of a main body having a single unit or assembly of multiples of plates,
ii) having teeth in profiles of any suitable shape including involute and circular sections to allow rotational motion,
iii) having teeth allowing epicycloid motion,
iv) having likely outlets similar to the outlets between the plates as in said internal gear (4) to allow exit of crushed fruits,
v) some said plates designed with larger sizes to reach through the said outlets(15) on said internal gear (4),
and the internal gear (4) is composed of:
i) multiples of said plates(14) which can be assembled and disassembled,
ii) teeth with proper shape and size to rotate in meshing relationship with the teeth of said external gear (5),
iii) an assembly of said plates(14) which are brought together with required gaps/outlets(15) in between to allow for fruit discharge,
iv) washers or spacers(11) of constant or adjustable thicknesses between the said plates(14),
v) fixing bolts or studs(13) which pass through said pre-drilled holes(12) on said plates(14) and the nuts to fix said plates(14) together.

## Patentansprüche

1. Zerkleinerer zum Zerkleinern von Früchten nur mit fleischigem Teil oder mit fleischigen Teilen und Kernen, der mit Hilfe des Volumenverminderungsprinzips betrieben wird, aufweisend;
**(a)**eine Motorwelle (9),
**(b)**einen von der Motorwelle (9) angetriebenen Arm (10),
**(c)**ein mit dem Arm (10) verbundenes Außenrad (5),
**(d)**ein Innenrad (4), aufweisend mehrere dünnen Platten (14) mit der gleichen Gestaltung, indem mehrere Spalten (15) sich dazwischen bilden lassen, um die Früchte zu zerkleinern, und welches dem Außenrad (5) erlaubt, sich in Zahneingriff-Beziehung zu drehen,
**(e)**Unterlegscheiben (11) zwischen den dünnen Platten (14) des Innenrads (4) und Bolzen (13), die durch vorgebohrte Löcher (12) an den dünnen Platten (14) durchlaufen,
**(f)**eine Unterplatte (3),
**(g)**eine Oberplatte (2) mit Öffnungen (6) für Frucht-Einlass.

2. Zerkleinerer nach Anspruch 1, **dadurch gekennzeichnet, dass**
**(a)**das Außenrad (5) aus einer Einheit hergestellt ist, oder aus mehreren dünnen Platten besteht,
**(b)**Zahnprofil der Zahnräder (4, 5) die beliebige Form aufweist, welche Kreisbewegung der Zahnräder ermöglicht, umfassend Evolvente und Kreisform,
**(c)**die Zähne auf dem Außenrad (5) eine Bewegung der Epizykloide durchführt,
**(d)**aufweisend Auslässe an dem Außenrad (5) ähnlich den Auslässen (15) an dem Innenrad (4) für Austreten der zerkleinerten Früchte,
**(e)**einige der dünnen Platten des Außenrads (5) mit leicht größerer Abmessung/Durchmesser vorgesehen sind, um sie zu den entsprechenden Auslässen (15) des Innenrads (4) gelangen zu lassen,

3. Zerkleinerer nach Anspruch 1, **dadurch gekennzeichnet, dass**
**(a)**das Innenrad (4) aus mehreren dünnen Platten (14) hergestellt ist, für Montage- und Demontagezwecke und auch für Zerkleinern von Früchten (7) bis zum Feinstaub (8) mit der erforderlichen kleineren Größe,
**(b)**aufweisend Zähne des Innenrads (4) mit der richtigen Form und Größe zum Laufen im Einklang mit den Zähnen des Außenrads (5),
**(c)**aufweisend das Innenrad (4), das aus mehreren dünnen Platten (14) mit der gleichen Gestaltung zusammengebaut wird, indem eine Spalte (15) sich für die Auslässe dazwischen bilden lassen,
**(d)**Anwesenheit der Unterlegscheiben (11) mit konstanter oder einstellbarer Dicke zwischen den dünnen Platten (14),
**(e)**Zusammenbau von den dünnen Platten (14) und den Unterlegscheiben (11) mittels der Bolzen (13), die durch vorgebohrte Löcher (12) an den dünnen Platten (14) durchlaufen,

4. Zerkleinerer nach Anspruch 1, wobei Zerkleinerung durch Drehen nur einer der Zahnräder (4, 5) oder beides gleichzeitig durchgeführt wird.

5. Zerkleinerer nach Anspruch 1, wobei die Dicke der Unterlegscheiben (11) und der Auslässe (15) zwischen den dünnen Platten (14) konstant ist, oder für Austreten der zerkleinerten Früchte (8) schrittweise von der Innenseite nach Außenseite des Innenrads (4) zunimmt.

6. Zerkleinerer nach Anspruch 1, wobei der mit dem Außenrad (5) verbundene Arm als ein Mischer funktioniert.

7. Zerkleinerer nach Anspruch 1, wobei der Außenrad (5)
i) aus einem Hauptteil mit einer einzigen Einheit oder Baugruppe mehrerer Platten besteht,
ii) Zähne aufweist, die Profile mit beliebiger geeigneter Form aufweisen, umfassend kreisförmige Abschnitte und Evolvente, um Drehbewegung zu ermöglichen,
iii) Zähne aufweist, die epizykloidische Bewegung ermöglicht,
iv) wahrscheinlich Auslässe ähnlich den Auslässen zwischen den Platten wie in dem Innenrad (4), um den Austritt der zerkleinerten Früchte zu ermöglichen,
v) einige der Platten, vorgesehen mit größeren Abmessungen, um sie zu den entsprechenden Auslässen (15) am Innenrad (4) gelangen zu lassen,
und das Innenrad (4) aus Folgendem besteht:
i) mehrere Platten (14), die zusammengebaut und auseinandergebaut werden kann,
ii) Zähne mit entsprechender Form und Größe zum Drehen in Zahneingriff-Beziehung mit den Zähnen des Außenrads (5),
iii) eine Baugruppe der Platten (14), welche mit erforderlichen Spalten/Auslässen (15) dazwischen zusammengebracht sind, um Austreten der Fürchte zu ermöglichen,
iv) Unterlegscheiben oder Abstandhalter (11) mit konstanter oder einstellbarer Dicke zwischen den Platten (14),
v) Befestigungs-Bolzen oder Stifte (13), die durch vorgebohrte Löcher (12) an den dünnen Platten (14) durchlaufen, und Muttern zum Verbinden der Platten (14) miteinander.

## Revendications

1. Un broyeur pour broyer seulement la partie molle des fruits ou la partie molle et les noyaux, fonctionnant au moyen d'un principe réducteur de volume comprenant;
a) un arbre moteur (9),
b) un bras (10) conduit par l'arbre moteur (9),
c) une roue dentée externe (5) reliée au bras (10),
d) une roue dentée interne (4) comprenant de multiples plaques minces assemblées ayant la même géométrie en laissant de multiples espaces (15) entre l'un et l'autre, afin de broyer les fruits et de permettre à ladite roue dentée externe (5) de tourner d'une manière réciproque,
e) des rondelles (11) entre lesdites plaques minces (14) de ladite roue dentée interne (4) et des boulons (13) passant par des trous perforés (12) sur lesdites plaques minces (14),
f) une plaque inférieure (3),
g) une plaque supérieure (2) avec des ouvertures (6) pour l'entrée du fruit,

2. Un broyeur selon la revendication 1 **caractérisé en ce que**:
a) ledit corps de la roue dentée externe est composé d'une unité unique ou consiste en de multiples plaques minces,
b) le profil de dent desdites roues dentées (4,5) ayant n'importe quelle forme pour permettre un mouvement circulaire desdites roues dentées, incluant un mouvement spiral et circulaire,
c) les dents sur ladite roues dentées externe (4, 5) effectuent un mouvement épicycloïde,
d) ayant des sorties sur ladite roue dentée externe (5) similaires aux sorties (15) sur ladite roue dentée interne (4) pour l'évacuation du fruit broyé,
e) ayant conçu certaines des plaques minces de ladite roue dentée externe (5) avec une taille ou/et un diamètre légèrement plus grand(e) pour les laisser atteindre à travers les sorties correspondantes (15) de ladite roue dentée interne (4),

3. Un broyeur selon la revendication 1 **caractérisé en ce que**;
a) ladite roue dentée interne (4) est faite de multiples desdites plaques minces (14) à des fins d'assemblage et de démontage et également pour broyer le fruit (7) de manière à ce qu'ils aient une certaine taille plus petite de particule.
b) ayant des dents de ladite roue dentée interne (4) dans la forme et taille appropriée pour marcher en harmonie avec les dents de ladite roue dentée externe (5),
c) ayant ladite roue dentée interne (4) assemblée à partir des multiples desdites plaques minces (14) de la même géométrie en laissant un espace (15) entre eux pour lesdites sorties,
d) la présence de rondelles d'épaisseur constantes ou adaptables (11) entre lesdites plaques minces (14),
e) l'assemblage desdites plaques minces (14) et desdites rondelles (11) par le moyen desdits boulons (13) en passant à travers lesdits trous perforés (12) sur lesdites plaques minces (14),

4. Un broyeur selon la revendication 1 où le broyage est effectué par la rotation de seulement une desdites roues dentées (4,5) ou des deux en même temps,

5. Un broyeur selon la revendication 1 où l'épaisseur desdites rondelles (11) et desdites sorties (15) entre lesdites plaques minces (14) est constante ou augmente progressivement de l'intérieur à l'extérieur de ladite roue dentée interne (4) pour une évacuation facile des fruits broyés (8),

6. Un broyeur selon la revendication 1 où ledit bras (10), relié à ladite roue dentée externe (5), fonctionne comme un mixeur,

7. Un broyeur selon la revendication 1 où la roue dentée externe,
i) est composée d'un corps principal ayant une unité unique ou un assemblage de multiples plaques,
ii) ayant des dents de profil de n'importe quelle forme, incluant des sections en spiral et circulaires pour permettre un mouvement de rotation,
iii) ayant des dents permettant un mouvement épicycloïdal.
iv) ayant des sorties probables similaires aux sorties entre les plaques comme dans ladite roue dentée interne (4) pour permettre la sortie des fruits broyés;
v) certaines desdites plaques mentionnées ont des tailles plus grandes pour atteindre par lesdites sorties (15), ladite roue dentée interne (4),
Et une roue dentée interne (4) qui est composée de:
i) multiples desdites plaques (14) qui peuvent être assemblées et démontées,
ii) dents avec une forme et taille appropriée pour tourner d'une manière réciproque avec les dents de ladite roue dentée externe (5),
iii) un assemblage desdites plaques (14) qui sont rassemblées avec les sorties/espaces nécessaires (15) dans l'intervalle pour permettre l'évacuation du fruit,
iv) des rondelles ou des espaces (11) d'épaisseur constantes ou adaptables entre lesdites plaques (14),
v) des boulons de fixation ou des clous (13) qui passent par lesdits trous perforés (12) sur lesdites plaques (14) et les écrous fixent lesdites plaques (14) ensemble.
